# EUROPEAN PATENT APPLICATION

(11) **EP 3 972 195 A1**
(43) Date of publication of application: **23.03.2022**
(21) Application number: 20196553.0
(22) Date of filing: 16.09.2020
(51) Int. Cl.: H04L 12/12, G06F 1/3203, H04L 12/24

(54) **A POWER SAVING HARDWARE NODE ALLOWING FOR A HIGH PERFOMANCE AND HIGH AVAILABILITY OF A VIRTUAL NETWORK FUNCTION**

(71) Applicant: Deutsche Telekom AG, 53113 Bonn (DE)
(72) Inventor: NEGM, Mohamed, 53175 Bonn (DE)
(74) Representative: Raible Deissler Lehmann Patentanwälte PartG mbB

(57) **Abstract**

A method for operating a datacenter of a mobile communication network, wherein a hardware node of a datacenter of a mobile communication network executes a virtual network function of the mobile communication network and a cloud controller of the datacenter receives a load signal being generated by the virtual network function and sends a control signal depending on the received signal to the hardware node, the control signal controlling a power saving function of the hardware node; a hardware node, a virtual network function, a cloud controller and a computer program product for a data center of a mobile communication network.

## Description

The invention relates to a method for operating a datacenter of a mobile communication network, wherein a hardware node of a datacenter of a mobile communication network executes a virtual network function (VNF) of the mobile communication network. The invention further relates to a hardware node, a virtual network function, a cloud controller and a computer program product for a datacenter of a mobile communication network.

An increasing plurality of datacenters of mobile communication networks are required to handle increasing workloads due to a progressive cloudification of software applications and an increasing use of virtual network functions (VNF). A datacenter comprises a cloud controller and a plurality of hardware nodes, i.e. hosts, being controlled by the cloud controller and may be connected to or part of a mobile communication network. The cloud controller may also be referred to as a datacenter controller or a cloud control node. A virtual network function is a network function which is provided by a software application instead of a former dedicated hardware unit, e.g. a firewall, a domain name server (DNS), a cache, a network address translator (NAT) and the like.

The increasing workloads cause an equally increasing power consumption of the datacenters and, hence, increasing operational costs of datacenters. Operators of datacenters, therefore, attempt to reduce the power consumption of the datacenter by deploying hardware nodes providing a power saving function, i.e. a power saving feature, which may be optionally enabled and disabled. The power saving function may exemplarily comprise one or more of a hibernation mode or sleep mode of a CPU or a RAM or different hardware ressources. Of course, enabling the power saving function of a hardware node reduces the performance of the hardware node.

On the other hand, vendors of virtual network functions, e.g. software applications providing network functions, are required to provide the virtual network functions both with a very high availability, particularly an availability of 99,999% for telecommunication virtual network functions, and with a very high performance.

Unfortunately, both the performance and the availability of a virtual network function is adversely affected by a power saving function of a hardware node executing the virtual network function. As a consequence, vendors of virtual network functions usually guarantee the required high availability and high performance of the virtual network function only with the power saving function of the hardware node executing the virtual network function being disabled.

It is therefore an object of the invention to suggest a method for operating a datacenter of a mobile communication network which allows both a hardware node of the datacenter for a low power consumption and a virtual network function being executed by the hardware node for a high availability and high performance.

One aspect of the invention is a method for operating a datacenter of a mobile communication network, wherein a hardware node of the datacenter of the mobile communication network executes a virtual network function of the mobile communication network. The virtual network function (VNF) is provided by a software application being executed by one or more than one hardware node of the datacenter and replaces a former dedicated hardware unit providing the network function. In contrast, a single hardware node may provide more than one virtual network function at a time.

Preferably, a cloud controller of the datacenter receives a load signal being generated by the virtual network function and sends a control signal to the hardware node, the control signal depending on the received load signal and controlling a power saving function of the hardware node. In other words, the virtual network function controls the power saving function of the one or more than one hardware node indirectly via the cloud controller. Controlling may comprise configuring, particularly on-the-fly. As a consequence, the cloud controller may prevent the virtual network function from being adversely affected by the power saving function of the one or more than one hardware node executing the virtual network function.

The cloud controller may additionally receive a status signal from the hardware node, i.e. a communication between the cloud controller and the hardware node may be bidirectional.

In further preferred embodiments, the virtual network function monitors a performance indicator value and generates a power saving warning signal as the load signal when the monitored performance indicator value function exceeds a predetermined performance indicator threshold. The monitored performance indicator value may take into account a total load of the hardware node, i.e. also loads of software applications being different from the virtual network function and being executed by the hardware node. The predetermined performance indicator threshold may be chosen below a performance indicator value corresponding to a possibly adverse affection of the virtual network function. For instance, the performance indicator threshold may be predetermined to be between 50% and 70%, particularly 60% or essentially 60%. Thereby, any adverse affection of the virtual network function is reliably prevented.

The cloud controller advantageously sends a disabling signal as the control signal for disabling the power saving function of the hardware node upon reception of the power saving warning signal. The hardware node disables the power saving function upon reception of the disabling signal. The hardware node may ignore the disabling signal when the power saving function of the hardware node is disabled when receiving the disabling signal.

Alternatively or additionally, the virtual network function generates an all-clear signal as the load signal when a performance indicator value falls below a predetermined performance indicator threshold. The predetermined performance indicator threshold may be chosen above a performance indicator value corresponding to a possibly adverse affection of the virtual network function. Thereby, any adverse affection of the virtual network function is reliably prevented. The performance indicator threshold associated with the power saving warning signal (first performance indicator threshold) may be chosen different from the performance indicator threshold associated with the all-clear signal (second performance indicator threshold).

The cloud controller advantageously sends an enabling signal as the control signal for enabling the power saving function of the hardware node upon reception of the all-clear signal. The hardware node enables the power saving function upon reception of the enabling signal. The hardware node may ignore the enabling signal when the power saving function of the hardware node is enabled when receiving the enabling signal.

Shortly summarized, the power requirement of the hardware node may be adjusted to ensure a reliable and performant execution of the virtual network function for any load of the hardware node.

In many embodiments, the virtual network function monitors a delay of an instruction of the virtual network function in a CPU execution, a filling level of a buffer of the virtual network function or a rate of dropping of user sessions as the performance indicator value. The instruction execution delay, the buffer filling level and user session dropping rate may be related to software applications being executed by the hardware node and being different from the virtual network functions. In other words, these exemplary performance indicator values are not limited to the virtual network functions. Indeed, they may take into account an overall load of the hardware node.

In other embodiments, the cloud controller controls a plurality of power saving functions. The plurality of power saving functions is controlled in case the hardware node comprises a plurality of power saving functions.

In still other embodiments, the cloud controller controls a plurality of hardware nodes. The plurality of hardware nodes is controlled in case the datacenter comprises a plurality of hardware nodes. Of course, each of the hardware nodes may comprise a plurality of power saving functions. Particularly, different hardware nodes may comprise different power saving functions. The cloud controller may enable and disable power saving functions of the hardware nodes individually, i.e. independently according to actual loads of the hardware nodes. Particularly, the cloud controller may send enabling signals or disabling signals to a single hardware node, all hardware nodes or selected hardware nodes of the datacenter.

Another aspect of the invention is a hardware node for a datacenter of a mobile communication network, the hardware node comprising a power saving function and being configured for disabling or enabling the power saving function depending on a received control signal. The power saving function may be configured to be disabled or enabled on-the-fly, i.e. without applying a cold restart to the hardware node.

Preferably, the hardware node comprises a plurality of different power saving functions. The different power saving functions allow for a fine adjustment of the hardware node to actual power requirements of the hardware node.

A third aspect of the invention is a virtual network function for a datacenter of a mobile communication network being configured for being executed by a hardware node of the datacenter. The virtual network function may be executed in a container provided by the hardware node.

According to the invention, the virtual network function is further configured for generating a load signal depending on a monitored performance indicator value.

The virtual network function is advantageously configured for monitoring a performance indicator value associated to the hardware node and generating the load signal when the monitored performance indicator value exceeds or falls below a predetermined performance indicator threshold.

Preferably, the virtual network function is configured for generating the load signal depending on a plurality of monitored performance indicator values. A multiple dependency of the generated load signal allows for a fine adjustment of the hardware node to actual power requirements of the hardware node, particularly if the hardware node comprises a plurality of power saving functions.

A fourth aspect of the invention is a cloud controller for a datacenter of a mobile communication network, the cloud controller being configured for receiving a load signal from a virtual network function being executed by a hardware node of the datacenter and for controlling a power saving function of the hardware node depending on the received load signal. The cloud controller allows the power saving function of the hardware node to be adjusted to actual power requirements of the hardware node, particularly on-the-fly and in real time, i.e. without a cold restart of the hardware node.

A fifth aspect of the invention is a datacenter for a mobile communication network, comprising a hardware node according to the invention, a virtual network function according to the invention and a cloud controller according to the invention, and being configured for carrying out a method according to the invention. The inventive datacenter allows for a power efficient operation of the hardware nodes and a reliable and performant execution of the virtual network function.

A sixth aspect is a computer program product for operating a datacenter of a mobile communication network, comprising a storage medium storing a program code, the program code causing a cloud controller or a virtual network function of the datacenter of the mobile communication network to carry out a method according to the invention when being executed by a processor of the cloud controller or a hardware node of the datacenter, respectively. The storage medium may be a DVD, a USB stick, a memory chip, a hard disk, a cloud storage and the like being connectable to the cloud controller or a hardware node of the datacenter and being accessible by the processor.

Further advantages and configurations of the invention become apparent from the following description and the enclosed drawings.

It shall be understood that the features described previously and to be described subsequently may be used not only in the indicated combinations but also in different combinations or on their own without leaving the scope of the present invention.

The invention is described in detail by means of an exemplary embodiment and with reference to the drawings.

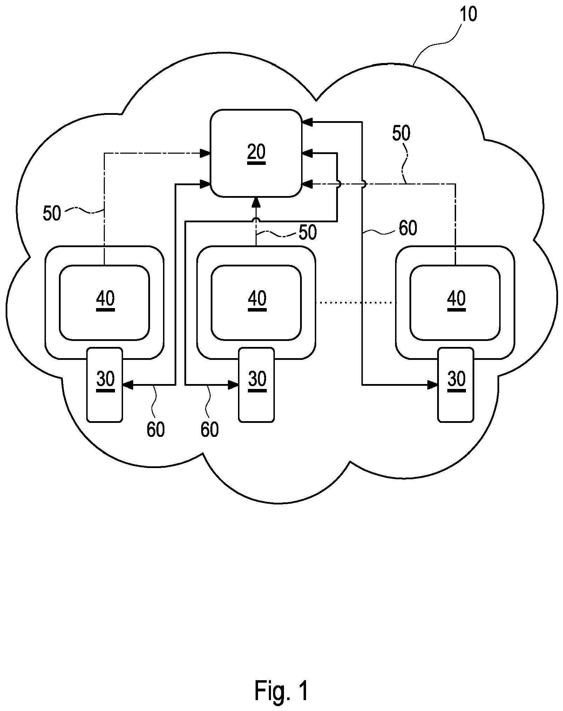

- Fig. 1: schematically shows a block diagram of a datacenter according to the invention for a mobile communication network

Fig. 1 schematically shows a block diagram of a datacenter 10 according to the invention. The datacenter 10 may be part of or connected to a mobile communication network. The datacenter 10 comprises a cloud controller 20 for the datacenter 10 of the mobile communication network, one or more than one hardware node 30 for a datacenter 10 of the mobile communication network and one or more than one virtual network function (VNF) 40 for the datacenter 10 of the mobile communication network. Fig. 1 exemplarily shows three hardware nodes 30 out of n hardware nodes 30 each hardware node 30 hosting a virtual network function 40.

The hardware node 30 comprises a power saving function and is configured for disabling or enabling the power saving function depending on a received control signal 60. The hardware node 30 may comprise a plurality of different power saving functions, i.e. more than one different power saving functions.

The virtual network function 40 is configured for being executed by the hardware node 30 of the datacenter 10 and for generating a load signal 50 depending on a monitored performance indicator value. The virtual network function 40 may be configured for generating the load signal 50 depending on a plurality of monitored performance indicator values.

The cloud controller 20 is configured for receiving the load signal 50 from the virtual network function 40 being executed by the hardware node 30 of the datacenter 10 and for controlling the power saving function of the hardware node 30 depending on the received load signal 50. The cloud controller 20 may control a plurality of power saving functions and/or a plurality of hardware nodes 30.

The datacenter 10 is configured for carrying out the method described below and may be configured by means of a computer program product for operating the datacenter 10 of the mobile communication network. The computer program comprises a storage medium storing a program code which causes the cloud controller 20 or the virtual network function 40 of the datacenter 10 to carry out the method described below when being executed by a processor of the cloud controller 20 or the hardware nodes 30, respectively.

The hardware node 30 executes the virtual network function 40 of the mobile communication network. The virtual network function 40 monitors a performance indicator value. The virtual network function 40 may monitor a delay of an instruction of the virtual network function 40 in a CPU execution, a filling level of a buffer of the virtual network function 40 or a rate of dropping of user sessions as the performance indicator value.

The virtual network function may generate a power saving warning signal as the load signal 50 when the monitored performance indicator value exceeds a predetermined performance indicator threshold. The virtual network function 40 may generate an all-clear signal as the load signal 50 when a performance indicator value falls below a predetermined performance indicator threshold.

The cloud controller 20 receives the load signal 50 being generated by the virtual network function 40 and sends a control signal 60 to the hardware node 30. The control signal 60 depends on the received load signal and controls a power saving function of the hardware node 30. The cloud controller 20 may send a disabling signal as the control signal 50 for disabling the power saving function of the hardware node 30 upon reception of the power saving warning signal. The cloud controller 20 may send an enabling signal as the control signal 50 for enabling the power saving function of the hardware node 30 upon reception of the all-clear signal.

### Reference Numerals

- 10: datacenter
- 20: cloud controller
- 30: hardware node
- 40: virtual network function (VNF)
- 50: load signal
- 60: control signal

## Claims

1. A method for operating a datacenter (10) of a mobile communication network, wherein
- a hardware node (30) of the datacenter (10) of the mobile communication network executes a virtual network function (40) of the mobile communication network; and
- a cloud controller (20) of the datacenter (10) receives a load signal (50) being generated by the virtual network function (40) and sends a control signal (60) to the hardware node (30), the control signal (60) depending on the received load signal (50) and controlling a power saving function of the hardware node (30).

2. The method according to claim 1, wherein the virtual network function (40) monitors a performance indicator value and generates a power saving warning signal as the load signal (50) when the monitored performance indicator value exceeds a predetermined performance indicator threshold.

3. The method according to claim 2, wherein the cloud controller (20) sends a disabling signal as the control signal (50) for disabling the power saving function of the hardware node (30) upon reception of the power saving warning signal.

4. The method according to one of claims 1 to 3, wherein the virtual network function (40) generates an all-clear signal as the load signal (50) when a performance indicator value falls below a predetermined performance indicator threshold.

5. The method according to claim 4, wherein the cloud controller (20) sends an enabling signal as the control signal (50) for enabling the power saving function of the hardware node (30) upon reception of the all-clear signal.

6. The method according to claim 2 to 5, wherein the virtual network function (40) monitors a delay of an instruction of the virtual network function (40) in a CPU execution, a filling level of a buffer of the virtual network function (40) or a rate of dropping of user sessions as the performance indicator value.

7. The method according to one of claims 1 to 6, wherein the cloud controller (20) controls a plurality of power saving functions.

8. The method according to one of claims 1 to 7, wherein the cloud controller (20) controls a plurality of hardware nodes (30).

9. A hardware node (30) for a datacenter (10) of a mobile communication network, the hardware node (30) comprising a power saving function and being configured for disabling or enabling the power saving function depending on a received control signal (60).

10. The hardware node (30) according to claim 9, comprising a plurality of different power saving functions.

11. A virtual network function (40) for a datacenter (10) of a mobile communication network, the virtual network function (40) being configured for being executed by a hardware node (30) of the datacenter (10) and for generating a load signal (50) depending on a monitored performance indicator value.

12. The virtual network function (40) according to claim 11, being configured for generating the load signal (50) depending on a plurality of monitored performance indicator values.

13. A cloud controller (20) for a datacenter (10) of a mobile communication network, the cloud controller (20) being configured for receiving a load signal (50) from a virtual network function (40) being executed by a hardware node (30) of the datacenter (10) and for controlling a power saving function of the hardware node (30) depending on the received load signal (50).

14. A datacenter (10) for a mobile communication network, comprising a hardware node (30) according to one of claims 9 and 10, a virtual network function (40) according to one of claims 11 and 12 and a cloud controller (20) according to claim 13, and being configured for carrying out a method according to one of claims 1 to 8.

15. A computer program product for operating a datacenter (10) of a mobile communication network, comprising a storage medium storing a program code, the program code causing a cloud controller (20) or a virtual network function (40) of the datacenter (10) of the mobile communication network to carry out a method according to one of claims 1 to 8 when being executed by a processor of the cloud controller (20) or a hardware node (30) of the datacenter (10), respectively.
